# EUROPÄISCHE PATENTANMELDUNG

(11) **EP 4 670 893 A1**
(43) Veröffentlichungstag der Anmeldung: **31.12.2025**
(21) Anmeldenummer: 25183780.3
(22) Anmeldetag: 18.06.2025
(51) Int. Cl.: B23K 9/095, B23K 31/00, B23K 31/12

(54) **SCHWEISSPROZESSÜBERWACHUNG**

(30) Priorität: 24.06.2024 DE 102024002053
(71) Anmelder: ALPAKA GmbH & Co. KG, 36100 Petersberg (DE)
(72) Erfinder: Hartmann, Frank, 36145 Hofbieber-Wiesen (DE)
(74) Vertreter: Borbach, Markus

(57) **Zusammenfassung**

Die vorliegende Erfindung betrifft ein Verfahren zur Überwachung eines Schweißprozesses und eine korrespondierende Schweißvorrichtung. Genauer geht es um Verfahren zur Qualitätssicherung für eine Schweißvorrichtung, wobei die Schweißvorrichtung auf mindestens ein Bauteil einwirkt und in einer Arbeitsumgebung positioniert ist, wobei das Verfahren die Bewertung und/oder Überwachung des Schweißprozesses anhand von mindestens zwei der folgenden Parameter vornimmt:
- Akustiksignale aus der Arbeitsumgebung
- Akustiksignale vom Körperschall
- Optische Aufnahmen der Schweißnaht
- Wärmebildaufnahmen der Schweißnaht
- Ultraschallaufnahmen

## Beschreibung

### Gebiet der Erfindung

Die vorliegende Erfindung betrifft ein Verfahrung zur Überwachung eines Schweißprozesses. Dazu können Sensoren, z.B. Schallsensoren vorgesehen, die den Körperschall des bearbeiteten Bauteils und den Schall in der Umgebung messen. Eine Auswerteeinheit ist dazu ausgebildet, die Schweißnaht auf Grundlage der gemessenen Werte zu bewerten und Signale zur Steuerung der Schweißvorrichtung anzubieten. Traditionell werden Schweißnähte, etwa aufgrund von optischen Verfahren, im einfachsten Fall durch Inaugenscheinnahme bewertet. Das offenbarte Verfahren geht hierüber hinaus, weil z.B. ein Schallsensor einen Prozessparameter misst, mit dessen Hilfe dann die schon gelegte Schweißnaht bewertet wird.

Die vorliegende Erfindung soll eine noch umfangreichere und verlässliche Bewertung von Schweißnähten erlauben. Darüber hinaus soll sie zusätzlich zur Qualitätssicherung fertiger und entstehender Schweißnähte eine stark optimierte Prozesssteuerung erlauben.

### Hintergrund der Erfindung

Schweißen ist eine gut etablierte und weiterhin hochrelevante Technik zum Verbinden von Metallteilen. Sie wird sowohl mit Handschweißgeräten als auch mit genau gesteuerten Industrieschweißgeräten angewandt. Sowohl industriell als auch von Hand sind präzise Schweißnähte dennoch schwer zu fertigen. Umgekehrt sind aber verlässliche Schweißnähte für die Nutzbarkeit eines Bauteils entscheidend. Ein Auftrennen und Korrigieren von Schweißnähten ist sehr aufwendig. Effiziente und verlässliche Schweißverfahren sind daher auch wirtschaftlich von großer Bedeutung.

Die Offenlegungsschrift DE 10 2019 134 555 A1 offenbart ein System zum Überwachen eines Schweißprozesses.

Die vorliegende Erfindung wünscht ein Verfahren zur Qualitätssicherung für eine Schweißvorrichtung anzubieten, welches bisherigen Verfahren überlegen ist. Die Erfindung bezieht sich auch auf eine Schweißvorrichtung als solche.

Diese Aufgabe wird durch ein Verfahren zur Qualitätssicherung für eine Schweißvorrichtung nach Anspruch 1 gelöst. Vorteilhafte Weiterbildungen sind in den Unteransprüchen angegeben. Die entsprechenden Vorteile weist eine Schweißvorrichtung nach den Ansprüchen 8 oder 9 auf.

### Nähere Beschreibung

Die vorliegende Erfindung betrifft ein Verfahren zur Qualitätssicherung für eine Schweißvorrichtung. Es kann sich um eine beliebige Schweißvorrichtung handeln, beispielsweise eine Punktschweißvorrichtung oder eine der üblichen Schweißvorrichtungen für den Gasbetrieb, beispielsweise zum Schutzgasschweißen. Unter einer Schweißvorrichtung wird hierin ein Gerät verstanden, mit dem das Fügeverfahren "Schweißen" genutzt werden kann. Die Erfindung ist prinzipiell auch auf ähnliche oder andere Fügeverfahren und Werkbearbeitungen anwendbar, etwa (in angepasster Form) auf ein Lötverfahren oder sogar auch einen Schleifprozess.

Der Schweißprozess kann im Rahmen des Verfahrens zur Qualitätssicherung gesteuert werden. Dabei werden übliche Prozessparameter optimiert, beispielsweise Schweißspannung, Schweißstrom, Schweißtemperatur oder Zusammensetzung eines Schweißgases. Das Verfahren kann im Einzelfall auch dazu dienen, eine Schweißnaht oder das Schweißergebnis nur zu bewerten, ohne dass der Prozess während des Schweißens laufend optimiert wird.

Im Rahmen des vorliegenden Verfahrens sollen mindestens zwei der folgenden Parameter berücksichtigt werden:
- Akustiksignale aus der Arbeitsumgebung
- Akustiksignale vom Körperschall
- Optische Aufnahmen der Schweißnaht
- Wärmebildaufnahmen der Schweißnaht
- Ultraschallaufnahmen (des Körperschalls oder Umgebungsschalls)

Diese Signale werden durch entsprechende Sensoren aufgenommen. Die Akustiksignale werden in der Regel durch Mikrofone aufgenommen. Optische Aufnahmen können durch Kameras und optische Sensoren aufgenommen werden.

Im Rahmen des Verfahrens ist es häufig zweckmäßig, eine Schweißnaht nach ihrer Fertigstellung zu bewerten. Diese Bewertung kann dann durch eine Bewertungskennzahl erfolgen, an der nummerisch abgelesen werden kann, ob die Schweißnaht gut oder schlecht ist. Ein solcher Bewertungsparameter kann auch in einem Datensatz mit Daten zum Schweißvorgang und zu den während des Schweißvorgangs erfassten Parametern abgelegt werden.

Es kann zweckmäßig sein, den Schweißprozess während des eigentlichen Prozesses überwiegend durch die Aufnahme akustischer Signale zu begleiten. Diese können mit optischen Signalen kombiniert werden. Solche optischen Signale können nach Beendigung des Schweißvorgangs aufgenommen werden, also im Rahmen einer Qualitätsprüfung der Schweißnaht, die häufig erst stattfindet, wenn das Werkstück schon vom Schweißgerät entfernt wurde. Nützliche optische Signale sind auch solche, die hierin als Quasi-Echtzeitsignale bezeichnet werden, weil sie während der Fertigstellung der Schweißnaht unmittelbar nach Entstehung eines neuen Schweißnahtabschnitts aufgenommen werden.

Es hat sich als zweckmäßig erwiesen, wenn man akustische Signale mit optischen Signalen und wenn man Echtzeitsignale mit später aufgenommenen Signalen kombiniert. Solche später aufgenommenen Signale können neben den Quasi-Echtzeitsignalen auch Signale zum fertigen Schweißergebnis sein, welche hierin auch als Post-Prozess-Signale bezeichnet werden.

Das Verfahren nach der vorliegenden Erfindung kann eine Optimierung eines Schweißprozesses mittels künstlicher Intelligenz umfassen. Ziel der Erfindung ist insoweit, die Qualität der Schweißnähte zu verbessern, indem relevante Prozessparameter in Echtzeit überwacht und angepasst werden. Das Wort Schweißnaht wird hierin allgemein für die Ergebnisse eines Schweißprozesses genutzt, es können auch Schweißpunkte sein.

Im Rahmen der vorliegenden Erfindung wird das Wort Prozess auch zur Beschreibung des Schweißvorgangs und des verbundenen Verfahrens zur Qualitätssicherung verwendet. Das Wort System wird auch zur Beschreibung einer Schweißvorrichtung verwendet.

Eine erfindungsgemäße Schweißvorrichtung kann eine Vielzahl von Sensoren umfassen, die während des Schweißprozesses verschiedene Parameter erfassen könnten. Diese Parameter werden im Rahmen des erfindungsgemäßen Verfahrens verwendet. Diese Parameter könnten den Schweißstrom, die Spannung, die Schweißgeschwindigkeit, die Temperatur an der Schweißstelle sowie die Gasflussrate des Schutzgases umfassen. Zusätzlich könnten akustische Daten durch Mikrofone erfasst werden, um das Schweißgeräusch zu analysieren.

Die während des Prozesses erfassten Rohdaten könnten gefiltert und bereinigt werden, um Rauschen zu entfernen und sicherzustellen, dass die Daten konsistent und genau sind. Die vorverarbeiteten Daten könnten anschließend in ein geeignetes Format gebracht werden, um sie für die Analyse und das maschinelle Lernen nutzbar zu machen.

Nach Abschluss des Schweißprozesses könnten die Qualität der Schweißnaht und andere relevante Parameter erfasst werden. Dies könnte die Messung der Nahtgeometrie, der Oberflächenrauheit und der Eindringtiefe umfassen. Optische oder taktile Messgeräte könnten verwendet werden, um präzise Qualitätsdaten zu erhalten. Auch diese Daten könnten vorverarbeitet werden, um Rauschen zu entfernen und die Daten konsistent zu halten.

Die vorverarbeiteten Daten könnten einer detaillierten Analyse unterzogen werden, wobei relevante Merkmale extrahiert werden könnten. Diese Merkmale könnten beispielsweise die Frequenzkomponenten des Schweißgeräuschs, die durchschnittliche und maximale Schweißgeschwindigkeit sowie die gemessene Qualität der Schweißnaht umfassen. Anschließend könnten maschinelle Lernalgorithmen eingesetzt werden, um Modelle zu trainieren, die möglicherweise die Beziehung zwischen den während des Prozesses erfassten Daten und der Qualität der Schweißnaht vorhersagen können.

Es ist möglich, sowohl überwachte als auch unüberwachte Lernmethoden einzusetzen. Beim überwachten Lernen würden die Modelle mit gekennzeichneten Daten trainiert, d.h., die Trainingsdatensätze könnten sowohl die Eingabedaten (wie Strom, Spannung, Temperatur) als auch die gewünschten Ausgaben (Qualitätsbewertungen der Schweißnähte) enthalten. Algorithmen wie lineare Regression, Entscheidungsbäume und neuronale Netze könnten verwendet werden, um die Muster in den Daten zu erkennen und präzise Vorhersagen zu ermöglichen.

Beim unüberwachten Lernen hingegen würden die Daten ohne vorherige Kennzeichnung verwendet. Ziel könnte es sein, Muster und Strukturen in den Daten zu erkennen, die möglicherweise nicht offensichtlich sind. Algorithmen wie k-Means-Clustering und Hauptkomponentenanalyse (PCA) könnten verwendet werden, um die Daten in Gruppen zu kategorisieren oder die wichtigsten Merkmale zu identifizieren, die die Variabilität der Daten erklären.

Um Trainingsdatensätze sinnvoll zu generieren, kann man verschiedene Ansätze verfolgen. Zunächst könnten Daten aus einer Vielzahl von Schweißprozessen gesammelt werden, um eine breite Datenbasis zu schaffen. Diese Daten könnten verschiedene Materialien, Schweißmethoden und Prozessbedingungen umfassen. Es ist vorteilhaft, die Daten systematisch zu erfassen, um sicherzustellen, dass sie repräsentativ für die realen Bedingungen sind.

Jeder Schweißprozess könnte genau dokumentiert werden, und die dabei erfassten Daten könnten sorgfältig annotiert werden, um genaue Qualitätsbewertungen zu ermöglichen. Dabei könnten sowohl erfolgreiche Schweißnähte als auch solche mit Mängeln berücksichtigt werden, um ein umfassendes Trainingsdatenset zu erstellen. Zudem könnten Simulationen und experimentelle Variationen des Schweißprozesses durchgeführt werden, um zusätzliche Daten zu generieren und seltene oder extremere Bedingungen abzudecken.

Die Daten könnten in Trainings- und Testsätze aufgeteilt werden, um die Leistung der Modelle zu validieren. Der Trainingssatz könnte verwendet werden, um die Modelle zu trainieren, während der Testsatz zur Bewertung und Optimierung der Modellleistung dienen könnte. Auf diese Weise kann sichergestellt werden, dass die Modelle generalisierbar sind und in verschiedenen Szenarien genaue Vorhersagen treffen können. Durch regelmäßige Aktualisierung und Erweiterung der Datensätze könnte das System kontinuierlich verbessert und angepasst werden.

Das trainierte Modell kann in das Steuer- und Überwachungssystem des Schweißprozesses integriert werden. Das System wäre so in der Lage, die erfassten Daten in Echtzeit zu verarbeiten und Vorhersagen über die Qualität der Schweißnaht zu treffen. Basierend auf diesen Vorhersagen könnte das System automatisch relevante Prozessparameter wie den Schweißstrom, die Spannung und die Schweißgeschwindigkeit anpassen, um eine optimale Qualität der Schweißnaht zu gewährleisten.

Das System kann kontinuierlich Daten von jedem Schweißprozess erfassen und speichern, um Datenbanken zu erweitern. Die gesammelten Daten könnten regelmäßig analysiert werden, um das Modell weiter zu verbessern. Mechanismen zum kontinuierlichen Lernen könnten implementiert werden, um das System an neue Bedingungen und Werkstoffe anzupassen.

Zur effektiven Nutzung der akustischen Daten im Schweißprozess könnte es vorteilhaft sein, die Erfassung dieser Daten mit den übrigen Echtzeitdaten zu synchronisieren. Die Synchronisation der akustischen Daten mit Parametern wie Schweißstrom, Spannung, Schweißgeschwindigkeit und Temperatur kann es ermöglichen, genaue Korrelationen zwischen den akustischen Signalen und den Prozessbedingungen herzustellen. Dies kann durch den Einsatz einer zentralen Steuerungseinheit erfolgen, die alle Sensordaten zeitlich synchron erfasst und speichert. Eine hohe zeitliche Auflösung der Datenerfassung kann sicherstellen, dass selbst kurzzeitige Veränderungen im Schweißgeräusch und den Prozessparametern genau aufgezeichnet werden. Hierbei ist sinnvoll, eine Abtastrate zu wählen, die sowohl die relevanten Frequenzbereiche der akustischen Signale als auch die Dynamik der Prozessparameter abdeckt.

Die Auswertung der akustischen Daten kann auf verschiedenen Methoden basieren, um relevante Informationen über den Schweißprozess zu extrahieren. Eine Frequenzanalyse könnte mittels Fourier-Transformation durchgeführt werden, um die Frequenzkomponenten des Schweißgeräusches zu identifizieren. Verschiedene Schweißprozesse könnten charakteristische Frequenzmuster erzeugen, die zur Identifizierung von Anomalien genutzt werden könnten. Zudem könnte eine Zeit-FrequenzAnalyse, beispielsweise mittels Kurzzeit-Fourier-Transformation (STFT) oder Wavelet-Transformation, angewendet werden, um die zeitliche Entwicklung der Frequenzkomponenten zu überwachen. Diese Techniken können helfen, plötzliche Änderungen oder ungewöhnliche Geräusche zu erkennen, die auf Probleme im Schweißprozess hinweisen könnten.

Eine weiterführende Analyse kann die Extraktion spezifischer akustischer Merkmale umfassen, wie mittlere Frequenz, spektrale Bandbreite, spektrale Schärfe und spektrale Flachheit. Diese Merkmale können als Eingabedaten für maschinelle Lernmodelle dienen. Überwachte Lernmethoden könnten verwendet werden, um Modelle zu trainieren, die zwischen normalen und abnormalen Schweißgeräuschen unterscheiden. Unüberwachte Lernmethoden könnten eingesetzt werden, um unbekannte Anomalien zu entdecken.

Zur Echtzeitverarbeitung der akustischen Daten könnten leistungsfähige Hardware und spezialisierte Softwarelösungen genutzt werden. Diese Systeme könnten kontinuierlich die aufgenommenen Geräusche analysieren und bei Erkennung von Abweichungen sofortige Anpassungen der Schweißparameter vornehmen oder Warnungen ausgeben. Die kontinuierliche Verbesserung der Modelle kann durch regelmäßige Aktualisierung der Trainingsdatensätze mit neuen akustischen und Prozessdaten erreicht werden.

Durch die kontinuierliche Erfassung und Analyse von Daten sowohl während als auch nach dem Schweißprozess kann die vorliegende Erfindung die Echtzeitüberwachung und -optimierung des Schweißprozesses ermöglichen. Dies kann zu einer signifikanten Verbesserung der Qualität der Schweißnähte führen, indem relevante Prozessparameter automatisch und in Echtzeit angepasst werden.

Zur Analyse und Bewertung der Schweißprozesse könnten während des Schweißvorgangs Echtzeitdaten erfasst und nach Abschluss des Prozesses Qualitätsdaten erhoben werden. Die Echtzeitdaten könnten Schweißstrom, Spannung, Schweißgeschwindigkeit, Temperatur an der Schweißstelle und Gasflussrate des Schutzgases, Drahtvorschub und Drahtdurchmesser umfassen. Zusätzlich könnten akustische Daten durch Mikrofone zur Analyse des Schweißgeräusches aufgenommen werden. Nach dem Prozess könnten Qualitätsdaten wie Nahtgeometrie, Oberflächenrauheit und Eindringtiefe gemessen werden. Diese Daten könnten in einer Tabelle strukturiert werden, die die Echtzeitdaten und die nach dem Prozess erfassten Qualitätsdaten zusammenführt. Eine Bewertung der Qualitätsdaten könnte aufzeigen, ob die Schweißnaht den Qualitätsanforderungen entspricht. Diese strukturierte Erfassung der Daten kann die Grundlage für das Training von maschinellen Lernmodellen bilden, die wiederum zur Optimierung der Prozessparameter in Echtzeit genutzt werden könnten. Die regelmäßige Analyse und Aktualisierung der Datensätze kann dazu beitragen, das System kontinuierlich zu verbessern und an neue Bedingungen und Werkstoffe anzupassen.

Das Verfahren ist auf ein erfindungsgemäßes Schweißgerät bezogen zu verstehen - und umgekehrt. Das heißt, Merkmale der Gestaltung des Schweißgerätes sind analog auf das Verfahren zu übertragen und Merkmale des Verfahrens sind analog auf Merkmale des Schweißgerätes zu übertragen.

Weitere Merkmale, aber auch Vorteile der Erfindung, ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Die Abbildungen sind teilweise leicht vereinfacht und schematisch.
- Fig. 1: zeigt eine schematische Seitenansicht einer Arbeitseinheit eines Schweißgerätes
- Fig. 2: zeigt eine Seitenansicht aus anderem Blickwinkel
- Fig. 3: stellt eine im Rahmen der vorliegenden Erfindung zweckmäßige Datentabelle dar
- Fig. 4: stellt eine andere im Rahmen der vorliegenden Erfindung zweckmäßige Datentabelle dar

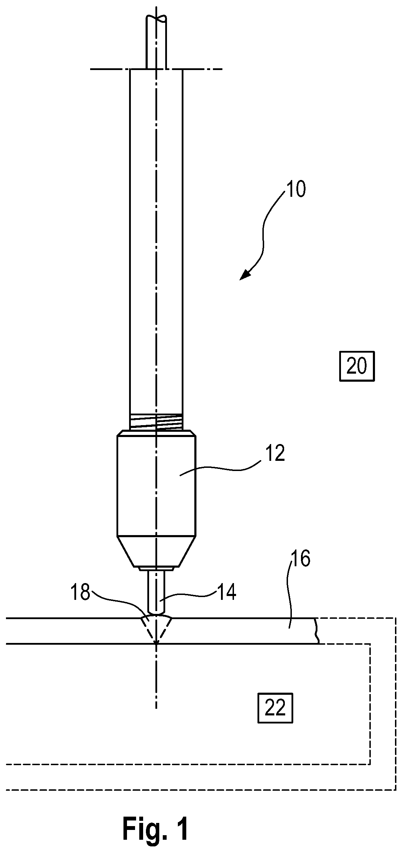

Fig. 1 zeigt in einer eher schematischen Seitenansicht die Arbeitseinheit 10 eines Schweißgerätes. Diese Arbeitseinheit wird je nach Gerät auch als Schweißpistole bezeichnet. Sie umfasst hier eine Endhülse 12, welche insbesondere der Führung eines Schweißdrahtes dient. Der Schweißdraht 14 schaut aus dem Ende der Arbeitseinheit heraus. Das Schweißgerät ist dazu ausgelegt, auf der Oberfläche eines Werkstücks 16 eine Schweißnaht zu erstellen. Es kann sich um eine gerade Schweißnaht handeln, die zur Verbindung des Werkstücks mit einem anderen Werkstück dient. Das Werkstück 16 kann beliebige Formen haben. Es kann insbesondere auch einen Hohlkörper umfassen.

Zur Überwachung des Schweißprozesses ist der Raumschallsensor 20 vorgesehen. Als Sensor wird er typischerweise ein Mikrofon umfassen. Wo dieser Sensor zweckmäßig angebracht ist, kann von der Situation abhängen. Insbesondere ist zu entscheiden, ob er in der Nähe zur Schweißnaht positioniert wird oder fern davon. Häufig wird ein Abstand von einem Meter oder weniger zweckmäßig sein.

Der Raumschallsensor 20 kann durch einen Körperschallsensor 22 ergänzt werden. Dieser kann innerhalb eines Werkstück-Hohlraums positioniert werden. Er kann auch unmittelbar an einer Oberfläche des Werkstücks positioniert werden. Beispielsweise auf der Oberseite des Werkstückes oder auf der Unterseite des Werkstücks.

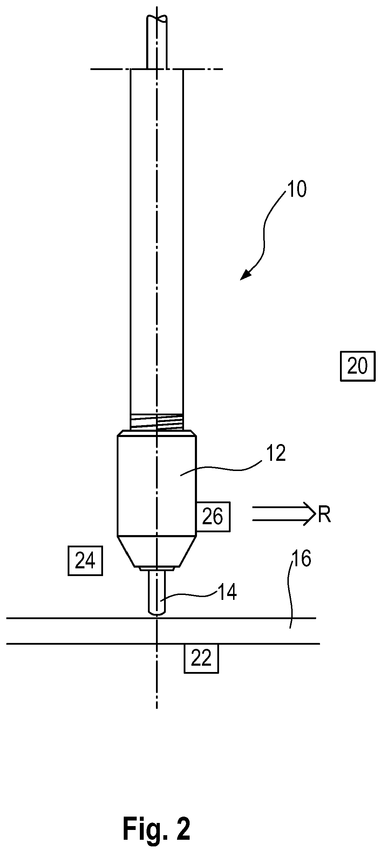

Fig. 2 zeigt dieselbe Einheit 10 eines Schweißgeräts in einer anderen Seitenansicht. Der Blickwinkel ist um 90° zur ersten Ansicht verschoben. Hier erkennt man, wie sich die Arbeitseinheit 10 des Schweißgeräts in der Vorschubrichtung R über das Werkstück 16 bewegt.

In diesem Fall dargestellt ist eine unmittelbare Positionierung des Körperschallsensors 22 am Werkstück.

Ebenfalls dargestellt sind weitere Sensoren. Dies ist beispielsweise der optische Sensor 24. Da der optische Sensor 24 das Entstehen einer fertigen Schweißnaht überwachen soll, wird er sinnvollerweise (bezogen auf die Vorschubrichtung) hinter dem Arbeitsteil eines Schweißgerätes angeordnet. Dort kann die gerade entstehende Schweißnaht während des Schweißprozesses gut beobachtet werden.

Ein Wärmesensor 26 kann in verschiedenen zweckmäßigen Positionen in der Nähe des Werkstücks und der Schweißnaht vorgesehen sein. Abgebildet ist hier, dass der Wärmesensor 26 mit der Arbeitseinheit 10 verbunden ist und in Vorschubrichtung positioniert wird. Eine andere Positionierung ist ebenfalls zweckmäßig.

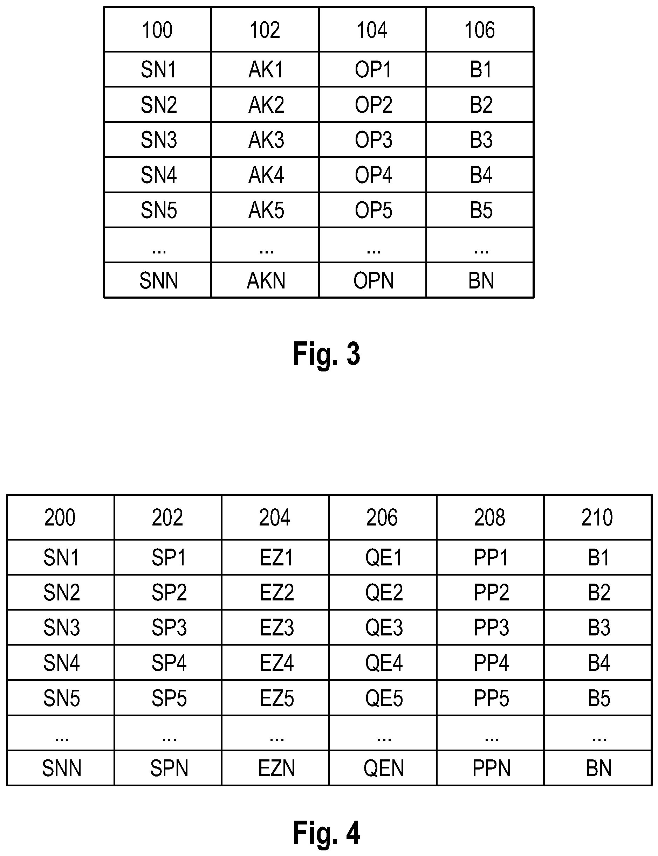

Fig. 3 stellt eine einfache Tabelle dar, welche im Rahmen der folgenden Erfindung zur Datenerfassung, vor allem aber auch zur Verbesserung der Datenauswertung, von Nutzen sein kann.

In der Spalte 100 sind Daten zu einer Schweißnaht abgespeichert, beispielsweise der Schweißnaht SN1 oder allgemein der Schweißnaht SNN. Unter einer Schweißnaht kann hier allgemein auch ein Schweißnahtabschnitt oder ein Schweißpunkt verstanden werden.

Eine laufende Nummer könnte vergeben werden, zu den Daten könnten Datum und Uhrzeit des Beginns und/oder des Endes des Schweißprozesses gehören. Ferner könnten dazu Angaben zu einem bearbeiteten Werkstück gehören.

In Spalte 102 könnten akustische Daten hinterlegt werden, AK1, usw. Dies könnte entweder Umgebungsschall oder Körperschall sein. Es wäre selbstverständlich auch möglich, eine weitere Spalte vorzusehen. Hier ist aber eine besonders einfache Tabelle exemplarisch erläutert.

In der Spalte 104 können optische Daten zu den einzelnen Schweißvorgängen stehen. Beispielsweise ein Bild im sichtbaren Bereich, aus dem sich die Qualität der Schweißnaht erkennen lässt. Da optische Daten häufig aus ganzen Datenfeldern bestehen, kann es sein, dass hier entweder umfangreiche Datenfelder abgespeichert werden, dass also tatsächlich der Wert OP1 nicht nur für einen einzelnen Wert, sondern für eine ganze Gruppe von Werten steht. Es könnte auch sein, dass in geeigneter Weise ein zusammenfassender Wert für die Natur der optischen Daten zum Schweißprozess repräsentiert wird.

In der Spalte 106 wird ein Bewertungskriterium gewählt. Dies könnte beispielsweise sein, dass die Schweißnaht aufgrund der Werte in OP1 gut ist, also die Daten in AK1 eine gute Schweißnaht repräsentieren. In der Regel wird die Tabelle mehr Spalten umfassen, wobei die einzelnen Kategorien ihrerseits mehrere Spalten umfassen können. Das gilt sowohl für die akustischen Daten, wie auch für die optischen Daten, wie auch für die Bewertungsdaten.

Es ist ebenfalls wahrscheinlich, dass die Spalte viele Zeilen hat, im Einzelfall mehr als 100 oder mehr als 1000 Zeilen. Es kann durchaus sinnvoll sein, nicht nur ganze Schweißnähte zu bewerten, sondern auch jeweils Schweißnahtabschnitte. Dadurch wird der Datensatz umfangreicher.

Fig. 4 zeigt eine Tabelle ähnlicher Art, welche ein wenig umfangreicher gestaltet ist. In Spalte 200 sind wieder Angaben zur Schweißnaht aufgezählt ("SNN"). Diese Spalte könnte mehrere Unterspalten umfassen. Die Angaben zur Schweißnaht können wie oben zu Figur 3 angegeben sein.

In Spalte 202 sind Daten zu den Schweißparametern eingegeben ("SPN"). Die Art der genauen Parameter hängt vom Schweißgerät ein. Häufig könnte dies der Schweißstrom und die Schweißspannung sein. Möglicherweise auch die Zusammensetzung eines Schweißgases oder das Material eines Schweißdrahtes.

In Spalte 204 können Echtzeitdaten zum Schweißnahtabschnitt abgespeichert werden ("EZN"). Typischerweise sind dies akustische Daten, also etwa Raumschalldaten oder Körperschalldaten - in der Regel werden es sogar Raumschalldaten und Körperschalldaten sein.

In Spalte 206 können Quasi-Echtzeitdaten abgelegt werden ("QEZN"). Dies könnten zum Beispiel optische Daten sein, mit denen die Schweißnaht unmittelbar nach ihrer Entstehung bewertet wird. Dies könnte auch ein Wärmebild zur Schweißnaht sein. Diese Daten werden hier als Quasi-Echtzeitdaten bezeichnet, da sie unmittelbar nach Vollendung der Schweißnaht aufgezeichnet werden können, aber sozusagen immer einen Moment nach dem frischen Schweißvorgang und somit nach den akustischen Daten (ganz unabhängig davon, dass sich Licht an sich schneller ausbreitet als der Schall).

In Spalte 208 sind Daten nach Abschluss des Schweißvorgangs("PPN"). "PP" soll dabei für "Post-Prozess"-Daten stehen. Es kann sich etwa um optische Daten handeln, die aus der optischen Auswertung der fertigen Schweißnaht gewonnen werden.

In der Spalte 210 sind Bewertungsdaten vorgesehen ("BN"). Wiederum sind hier auch mehrere Spalten denkbar. Beispielsweise sind Bewertungsdaten aufgrund der Echtzeitdaten möglich, Bewertungsdaten aufgrund der Quasi-Echtzeitdaten und weitere Bewertungsdaten aufgrund der PP-Daten, also der Daten, die nach Abschluss des Schweißvorganges aufgenommen werden.

Besonders interessant ist möglicherweise die Bewertung der Schweißnaht nach dem vollständigen Abschluss des Schweißvorgangs, da dann eingehendere Analysen möglich sind. Wenn diese Daten in die Bewertung in Spalte 210 einfließen, ist eine besonders qualifizierte Einordnung der Echtzeitdaten möglich. Diese wiederum können mit den Schweißparametern in Spalte 202 abgeglichen werden und so ist leicht ein fortlaufender Prozess zur Schweißvorgangsoptimierung erreichbar. Über die Bewertungsdaten, besonders über sehr verlässliche PP-Daten, kann ein überwachtes Lernen einer KI effizient überstürzt werden.

Insgesamt erkennt man, wie sich eine stark verbesserte Schweißvorrichtung und ein korrespondierendes Verfahren verwirklichen lassen.

### Bezugszeichenliste

- 10: Arbeitseinheit einer Schweißvorrichtung
- 12: Drahtführung
- 14: Schweißdraht
- 16: Werkstück
- 18: Schweißnaht
- 20: Raumschall-Sensor
- 22: Körperschall-Sensor
- 24: Optischer-Sensor
- 26: Wärmesensor
- 100: Spalte für Angaben zur Schweißnaht (SN)
- 102: Spalte für Akustikdaten (AK)
- 104: Spalte für optische Daten (OP)
- 106: Spalte für Angaben zur Bewertung einer Schweißnaht (B)
- 200: Spalte für Angaben zur Schweißnaht (SN)
- 202: Spalte für Angaben zu Schweißparametern (SP)
- 204: Spalte für Echtzeitdaten (EZ)
- 206: Spalte für Quasi-Echtzeitdaten (QEZ)
- 208: Spalte für Post-Prozess-Daten (PP)
- 210: Spalte für Angaben zur Bewertung einer Schweißnaht (B)

## Patentansprüche

1. Verfahren zur Qualitätssicherung für eine Schweißvorrichtung, wobei die Schweißvorrichtung auf mindestens ein Bauteil einwirkt und in einer Arbeitsumgebung positioniert ist, wobei das Verfahren die Bewertung und/oder Überwachung des Schweißprozesses anhand von mindestens zwei der folgenden Parameter vornimmt:
- Akustiksignale aus der Arbeitsumgebung
- Akustiksignale vom Körperschall
- Optische Aufnahmen der Schweißnaht
- Wärmebildaufnahmen der Schweißnaht
- Ultraschallaufnahmen

2. Verfahren nach dem vorhergehenden Anspruch, bei dem die Schweißnaht nach ihrer Fertigstellung bewertet wird.

3. Verfahren nach einem der vorhergehenden Ansprüche, bei dem ein Betriebsparameter des Schweißgerätes während des Schweißvorgangs gesteuert wird.

4. Verfahren nach einem der vorhergehenden Ansprüche, bei dem während des Schweißprozesses akustische Signale aufgenommen werden und nach dem Schweißprozess optische Signale aufgenommen werden.

5. Verfahren nach dem vorhergehenden Anspruch, bei dem ein Datensatz mit optischen Signalen und ein Datensatz mit akustischen Signalen kombiniert wird.

6. Verfahren nach dem vorhergehenden Anspruch, bei dem dem Datensatz ein Bewertungsparameter hinzugefügt wird.

7. Verfahren nach dem vorhergehenden Anspruch, bei dem ein Datensatz mit Echtzeit- Signalen und ein Datensatz mit Post-Prozess-Signalen kombiniert wird.

8. Verfahren nach einem der vorhergehenden Ansprüche, bei dem eine Optimierung eines Schweißprozesses mittels künstlicher Intelligenz erfolgt.

9. Schweißvorrichtung, welche Sensoren zur Erfassung von mindestens zwei der folgenden Daten umfasst: Umgebungsschall, Körperschall, Ultraschall, sichtbares Bild einer Schweißnaht, Wärmebild einer Schweißnaht.

10. Schweißvorrichtung, welche Vorrichtungen zur Ausführung des Verfahrens nach einem der Ansprüche 1 bis 6 umfasst.
